# EUROPÄISCHE PATENTANMELDUNG

(11) **EP 1 319 934 A2**
(43) Veröffentlichungstag der Anmeldung: **18.06.2003**
(21) Anmeldenummer: 02406056.8
(22) Anmeldetag: 05.12.2002
(51) Int. Cl.: G01L 3/10

(54) **Magnetostriktiver Drehmomentsensor**

(30) Priorität: 15.12.2001 DE 10161803
(71) Anmelder: HILTI Aktiengesellschaft, 9494 Schaan (LI)
(72) Erfinder: Böni, Hans, 9470 Buchs (CH); Würsch, Christoph, 9470 Werdenberg (CH); Tränkler, Hans-Rolf, 82031 Gründwald/München (DE); Horn, Michael, 85521 Ottobrunn (DE); Ruser, Heinrich, 81541 München (DE)
(74) Vertreter: Wildi, Roland

(57) **Zusammenfassung**

Eine Anordnung und ein Verfahren zur Erfassung des Drehmoments einer sich drehenden, den magnetostriktiven Effekt aufweisenden torsionsbeanspruchten elastischen Welle (2) durch einen elektromagnetischen Sensor (1) mit zumindest einem Magnetisierungsmittel (3) zur Magnetisierung des Wellenmaterials bis in die komplette Sättigung und mit einer Detektorwicklung (4a, 4b) zur Erfassung der magnetischen Eigenschaften des Wellenmaterials, wobei aus der magnetischen Anisotropie das Drehmoment (M) der Welle (2) bestimmt wird, wobei periodisch in einem ersten Schritt zumindest Teilbereiche der sich drehenden Welle (2) bis in die komplette Sättigung magnetisiert werden und in einem zweiten Schritt durch diesen Magnetisierungszustand definierte Arbeitspunkte für die Erfassung der magnetischen Eigenschaften des Wellenmaterials eingestellt werden.

## Beschreibung

Die Erfindung bezeichnet einen elektromagnetischen Sensor zur Erfassung des Drehmoments einer sich drehenden, den magnetostriktiven Effekt aufweisenden torsionsbeanspruchten elastischen Welle.

Derartige Sensoren werden zur berührungslosen Erfassung des Drehmoments einer sich drehenden Welle verwendet, bspw. von Antriebswellen von handgeführten Elektrowerkzeuggeräten.

Übliche Drehmomentsensoren, die auf dem magnetoelastischen Prinzip beruhen, messen eine Änderung der Permeabilität des magnetischen Kreises, d.h. die Hysterese wird nur in einem kleinen Bereich um Null ausgesteuert. Dies hat den Vorteil, dass geringe Leistungen zur Aussteuerung benötigt werden und hohe Messfrequenzen realisiert werden können. Der wesentliche Nachteil liegt in der Abhängigkeit des tatsächlichen Arbeitspunktes von der Vorgeschichte des Materials und bei radialen Prinzipien zusätzlich in der starken Luftspalt-Abhängigkeit des Messsignals. Vor allem radiale Messanordnungen von magnetischen Kreisen sind empfindlich auf das radiale Wellenspiel. Besteht auch nur ein geringes Wellenspiel, so wird dem Ausgangssignal des Sensors ein periodisches Signal überlagert, welches durch die periodische Änderung des Luftspaltes zustande kommt. Der Luftspalt liefert den dominanten magnetischen Widerstand in solchen Messanordnungen. Die effektive Permeabilität des magnetischen Kreises hängt sehr stark vom Luftspalt ab. Radiale Messanordnungen, die auf einer Auswertung der effektiven Permeabilität beruhen, leiden also immer unter dem Einfluss des Luftspaltes. Dieser kann zwar durch Verwendung von zwei oder mehreren, gegenüber angeordneten Sensoren oder durch ein differentielles Messprinzip verringert werden, jedoch verdoppeln sich die Kosten und der Platzbedarf.

Nach der DE4323246A1 weist ein elektromagnetischer Sensor zur Erfassung des Drehmoments einer sich drehenden, den magnetostriktiven Effekt aufweisenden torsionsbeanspruchten elastischen Welle eine Erregerwicklung zur periodischen Magnetisierung bestimmter Bereiche der Welle und eine Detektorwicklung zur Detektion des sich aus der bei Torsionsbeanspruchung einstellenden magnetischen Anisotropie auf, wobei aus der magnetischen Anisotropie von einem Mikrocontroller das Drehmoment der Welle berechnet wird. Durch die Abhängigkeit des Arbeitspunktes von der Vormagnetisierung sowie der thermischen und mechanischen Vorbelastung der Welle sowie den Einfluss des Luftspaltes zwischen der Welle und der Detektorwicklung treten erhebliche Messungenauigkeiten auf.

Nach der EP434089 wird bei einem elektromagnetischen Drehmomentsensor die zu Messungenauigkeiten führende Verschiebung des Arbeitspunktes durch überlagerte Felder über die Auswertung der geradzahligen Fourierkoeffizienten der phasenstarr detektierten Hysteresekurve ermittelt oder durch gezielte Symmetrierung durch Überlagerung mit einem Kompensationsfeld vermieden. Dazu werden bestimmte Bereiche der Welle periodisch bis in die durch einen Kennlinienknick gekennzeichnete beginnende Sättigung magnetisiert, um die Unsymmetrie durch die Größe der geradzahligen Fourierkoeffizienten detektieren zu können.

Die Aufgabe der Erfindung besteht in der Realisierung eines einfachen elektromagnetischen Drehmomentsensors hoher Messgenauigkeit.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein elektromagnetischer Sensor zur Erfassung des Drehmoments einer sich drehenden, den magnetostriktiven Effekt aufweisenden torsionsbeanspruchten elastischen Welle mindestens ein Magnetisierungsmittel zur Magnetisierung bis in die komplette Sättigung und eine Detektorwicklung zur Erfassung der magnetischen Eigenschaften des Wellenmaterials auf, wobei aus der magnetischen Anisotropie das Drehmoment der Welle bestimmt wird, zumindest Teilbereiche der sich drehenden Welle periodisch bis in die komplette Sättigung magnetisiert werden und durch diesen Magnetisierungszustand definierte Arbeitspunkte für die Erfassung der magnetischen Eigenschaften des Wellenmaterials eingestellt werden.

Durch die Definition des Arbeitspunktes des elektromagnetischen Sensors nach vorheriger kompletter Sättigung, bei welcher eine etwaige magnetische Vorgeschichte periodisch gelöscht wird, werden undefinierte Arbeitspunkte vermieden und wird somit eine hohe Messgenauigkeit erzielt. Bei einer Sättigungsfeldstärke H_{sätt} beträgt zur Erreichung der Meßunsicherheit e die maximale Feldstärke Hₘₐₓ für die Durchmagnetisierung mindestens (1-e) H_{sätt}.

Vorteilhaft werden die gemessenen magnetischen Eigenschaften über die Zeit einer ganzen Umdrehung der Welle zeitlich gemittelt, um die Einflüsse radialen Wellenspiels zu verringern.

Vorteilhaft erfolgt die komplette Sättigung der Teilbereiche der sich drehenden Welle ausschliesslich in genau einem Quadranten der magnetischen Kennlinie, wodurch eine unsymmetrische Hysterese ausgebildet wird, welche grössere Hystereseverluste vermeidet und somit die zusätzlich erforderliche Energie reduziert sowie den Schaltungsaufwand wesentlich reduziert.

Vorteilhaft erfolgt die Berechnung des Drehmoments mittels der gemessenen magnetischen Sättigungsinduktion, welche direkt messbar ist.

Vorteilhaft erfolgt zusätzlich oder alternativ bei der Berechnung des Drehmoments eine Normierung auf eine Sättigungsfeldstärke H_{sätt}, bei welcher ein hoher Prozentsatz der maximalen magnetischen Induktion erzielt wird, wodurch fertigungsbedingt durch Montagefehler und radiales Wellenspiel schwankende Scherungseinflüsse der Welle eliminiert werden.

Vorteilhaft erfolgt zusätzlich oder alternativ die Berechnung des Drehmoments aus einer Änderung zumindest eines Polynomialkoeffizienten der in Echtzeit mit einem Mikrocontroller durch ein Polynom approximierten Äste der Hysteresekurve, wodurch sich eine hohe Störsicherheit ergibt.

Vorteilhaft erfolgt durch geeignete elektromagnetische Anordnungen der Magnetisierungsmittel die komplette Sättigung der Teilbereiche der sich drehenden Welle unter +/- 45° zur Wellenachse, wodurch die Magnetisierungen längs der Hauptspannungsrichtungen der auf Torsion beanspruchten Welle verlaufen und somit sensibel auf die Hauptspannungen reagieren.

Vorteilhaft sind zwei Detektorwicklungen vorhanden und in einer magnetischen Brückenschaltung rechtwinklig zueinander angeordnet, wodurch die Unterschiede der magnetischen Eigenschaften der Teilbereiche der Welle direkt detektierbar sind.

Vorteilhaft ist die Welle als Hohlwelle ausgebildet, welche am Innenmantel mindestens die Hälfte der Spannungsbeanspruchung wie am Aussenmantel ausbildet, wodurch neben weichmagnetischen oder magnetisch halbharten Materialien auch für Wellen handelsübliche Maschinenbaustähle mit vertretbarer zusätzlicher Energie und vertretbarem Schaltungsaufwand periodisch in die komplette Sättigung überführbar sind sowie einen hinreichenden magnetostriktiven Effekt aufweisen.

Vorteilhaft ist das Magnetisierungsmittel konstruktiv so ausgebildet, dass es in Teilen an die Welle im eingebauten Zustand angefügt werden kann, wodurch eine Nachrüstung und eventuelle Wartung ohne Demontage der Welle möglich ist.

Vorteilhaft ist das Magnetisierungsmittel ein Elektromagnet, wodurch elektrisch steuerbar zumindest Teilbereiche der sich drehenden Welle periodisch ummagnetisierbar sind. Die für die komplette Sättigung zusätzlich erforderliche Energie ist insbesondere im Verwendungsfall bei handgeführten Elektrowerkzeuggeräten im Vergleich zur Antriebsleistung unwesentlich.

Alternativ vorteilhaft ist das Magnetisierungsmittel ein permanentmagnetischer Kreis, welcher von der Detektorwicklung umfänglich beabstandet angeordnet ist, wodurch zumindest Teilbereiche der sich drehenden Welle periodisch durch die Drehung der Welle vormagnetisierbar sind, ohne dafür zusätzliche Elektroenergie zu benötigen.

In dem durch diese magnetische Sättigung eingestellten definierten Arbeitspunkt des Wellenmaterials werden nach dem durch die Wellendrehung bewirkten Verlassen des permanentmagnetischen Kreises die magnetischen Eigenschaften des magnetostriktiven Wellenmaterials durch eine periodische elektromagnetische Kleinsignal-Ummagnetisierung erfasst. Die für die ständig wiederkehrende komplette magnetische Sättigung des Wellenmaterials erforderliche Leistung wird der mechanischen Antriebsleistung der Maschine entnommen, wodurch hierfür keine zusätzlichen elektrischen Schaltungen notwendig sind.

Die Erfindung wird an Ausführungsbeispielen näher erläutert mit
Fig. 1a, 1b, 1c, 1d als Drehmomentsensor,
Fig. 2a, 2b, 2c als Variante des Drehmomentsensors.

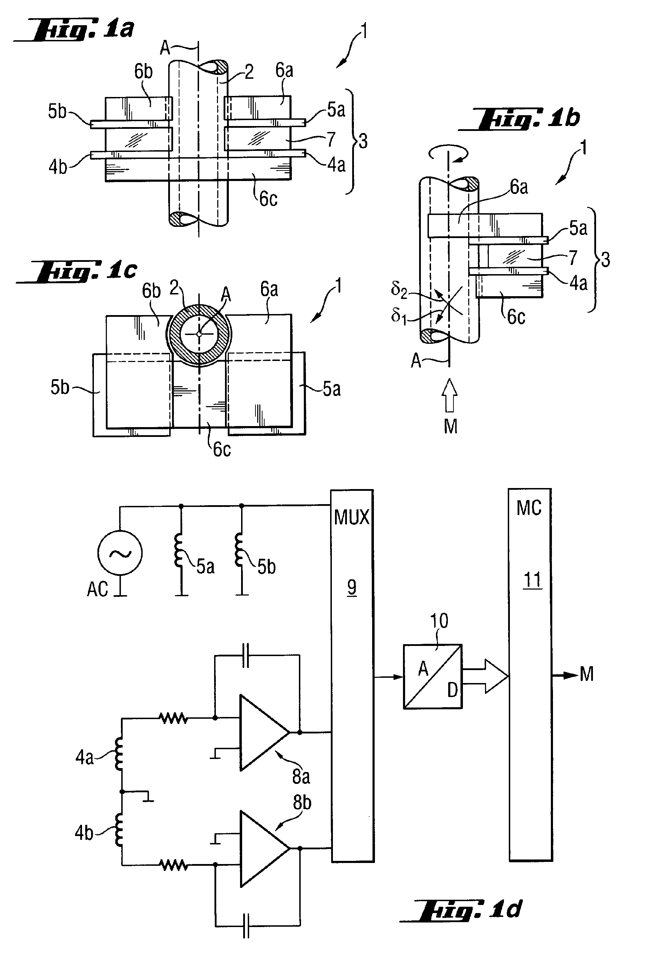

Nach den Fig. 1 weist ein Drehmomentsensor 1 einer um eine Wellenachse A drehbaren hohlen Welle 2 ein zugeordnetes Magnetisierungsmittel 3 und zwei Detektorwicklungen 4a, 4b auf, wobei das Magnetisierungsmittel 3 mit zwei Planarspulen 5a, 5b ausgebildet ist, welche jeweils ein Magnetfeld erzeugen, das in + 45° bzw. - 45° zur Wellenachse A gerichtet ist. Die Felder treten über die oberhalb der Planarspulen liegenden Polschuhe 6a, 6b, in die Welle 2 ein und über den unterhalb der Planarspulen 5a, 5b liegenden und um 90 ° versetzten Polschuh 6c wieder aus der Welle 2 aus. Durch den Höhen- und Winkelversatz ergeben sich insgesamt die ± 45 ° zur Wellenachse A. Die magnetischen Kreise werden über die zwischen den Planarspulen 5a, 5b liegenden weichmagnetischen Zwischenstücke 7 geschlossen. Der magnetische Kreis ist so bemessen, dass die Welle 2 periodisch durch die mit einer Wechselspannungsquelle AC verbundenen Planarspulen 5a, 5b so weit in die Sättigung magnetisiert wird, dass der Einfluss der sich durch Fertigungsfehler ändernden magnetischen Scherung unterdrückt wird. Die bei einem Drehmoment M unter ± 45° zur Wellenachse A liegenden Hauptspannungen σ₁ , σ₂ führen zur Vergrösserung bzw. Verkleinerung dieser Sättigungsinduktionen, deren Differenz vom Drehmoment M abhängt. In den Detektorwicklungen 4a, 4b werden, bedingt durch die Ummagnetisierung, gemäss Induktionsgesetz periodisch elektrische Spannungen induziert. Das in Integrationsgliedern 8a, 8b analog ermittelte zeitliche Integral der in den Detektorwicklungen 4a, 4b entstehenden Induktionsspannungen ergibt die Hysteresekurven des Vorganges der Ummagnetisierung und damit die positiven und negativen Sättigungsinduktionen. Die analogen Werte der den Hysteresekurven entsprechenden Spannungen werden nach den Integrationsgliedern 8a, 8b über einen Multiplexer (MUX) 9 und einen A/D- Wandler 10 in digitale Werte gewandelt und in dem Mikrocontroller 11 zur Berechnung des Drehmoments M benutzt, welches digital zu Verfügung steht.

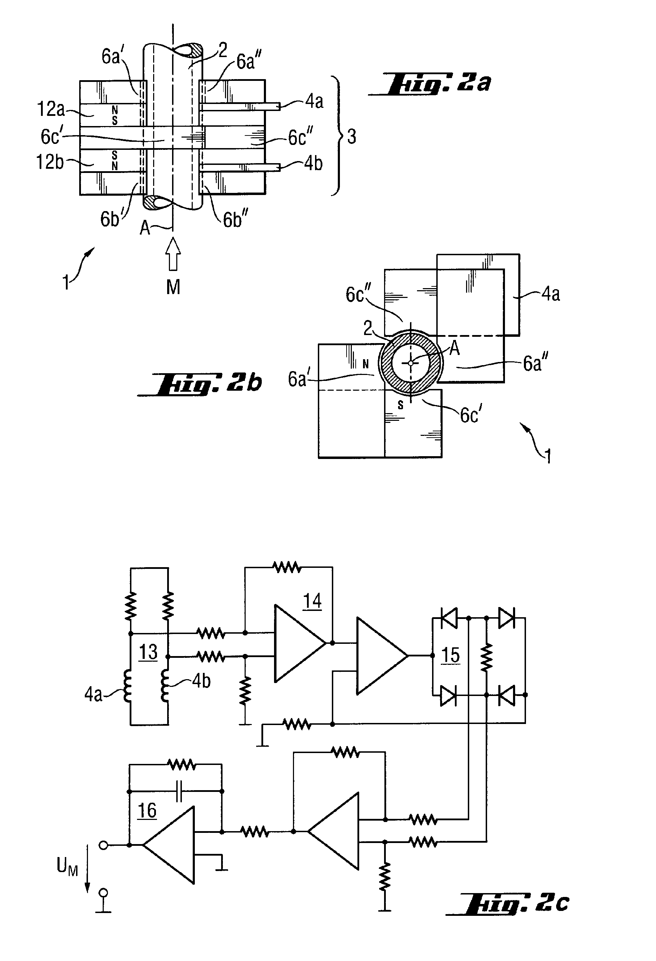

Nach den Fig. 2 ist das Magnetisierungsmittel 3 mit zwei axial versetzten Permanentmagneten 12a, 12b ausgebildet. Dabei ist der magnetische Kreis so dimensioniert, dass eine ausreichende und eindeutige, von der Vorgeschichte unabhängige Vormagnetisierung auch bei üblichen Wellenwerkstoffen erzielt werden kann. Die durch die Permanentmagnete 12a, 12b erzeugten Magnetfelder werden hier so axial versetzt angeordnet, dass getrennte Bereiche mit den Vorzugsrichtungen ± 45 ° zur Wellenachse A entstehen. Die magnetischen Felder treten durch die untereinander liegenden oberen und unteren Polschuhe 6a', 6b' in die Welle 2 ein und durch den gemeinsamen mittleren Polschuh 6c' wieder aus. Auf der umfänglich einen Seite der Welle 2 erfolgt die kräftige Vor- bzw. Durchmagnetisierung über die Permanentmagnete 12a, 12b, die definierte, weitgehend von der Vorgeschichte unabhängige Arbeitspunkte einstellt, und auf der Rückseite der Welle 2 werden an den dadurch definiert eingestellten Arbeitspunkten mit den Detektorwicklungen 4a, 4b die drehmomentabhängigen Permeabilitäten erfasst, wobei die magnetischen Felder durch die untereinander liegenden oberen und unteren Polschuhe 6a", 6b" in die Welle 2 einund durch den gemeinsamen mittleren Polschuh 6c" wieder austreten, wodurch die Detektorwicklungen 4a, 4b bezüglich der Magnetfelder eine magnetisch senkrechte Ausrichtung aufweisen. Die durch Verschaltung der magnetisch senkrechten Detektorwicklungen 4a, 4b in einer Messbrücke 13 entstehende Differenzspannung wird in einem Differenzverstärker 14 verstärkt und in einer Präzisionsgleichrichterschaltung 15 gleichgerichtet. Nach Herstellung des Massebezuges und Tiefpassfilterung in einem Tiefpassfilter 16 entsteht am Ausgang die analoge drehmomentabhängige Signalspannung UM.

## Patentansprüche

1. Verfahren zur Erfassung des Drehmoments einer sich drehenden, den magnetostriktiven Effekt aufweisenden torsionsbeanspruchten elastischen Welle (2) durch einen elektromagnetischen Sensor (1) mit zumindest einem Magnetisierungsmittel (3) zur Magnetisierung des Wellenmaterials bis in die komplette Sättigung und mit einer Detektorwicklung (4a, 4b) zur Erfassung der magnetischen Eigenschaften des Wellenmaterials, wobei aus der magnetischen Anisotropie das Drehmoment (M) der Welle (2) bestimmt wird, **dadurch gekennzeichnet, dass** periodisch in einem ersten Schritt zumindest Teilbereiche der sich drehenden Welle (2) bis in die komplette Sättigung magnetisiert werden und in einem zweiten Schritt durch diesen Magnetisierungszustand definierte Arbeitspunkte für die Erfassung der magnetischen Eigenschaften des Wellenmaterials eingestellt werden.

2. Verfahren nach Anspruch 1, **dadurch gekennzeichnet, dass** in einem dritten Schritt die gemessenen magnetischen Eigenschaften über die Zeit einer ganzen Umdrehung der Welle (2) zeitlich gemittelt werden.

3. Verfahren nach Anspruch 1 oder 2, **dadurch gekennzeichnet, dass** im ersten Schritt die komplette Sättigung der Teilbereiche der sich drehenden Welle (2) ausschliesslich in genau einem Quadranten der magnetischen Kennlinie erfolgt.

4. Verfahren nach einem der Ansprüche 1 bis 3, **dadurch gekennzeichnet, dass** die Berechnung des Drehmoments (M) mittels der gemessenen magnetischen Sättigungsinduktion erfolgt.

5. Verfahren nach einem der Ansprüche 1 bis 4, **dadurch gekennzeichnet, dass** zusätzlich oder alternativ bei der Berechnung des Drehmoments (M) eine Normierung auf eine Sättigungsfeldstärke erfolgt, bei welcher ein hoher Prozentsatz der maximalen magnetischen Induktion erzielt wird.

6. Verfahren nach einem der Ansprüche 1 bis 5, **dadurch gekennzeichnet, dass** zusätzlich oder alternativ die Berechnung des Drehmoments aus einer Änderung zumindest eines Polynomialkoeffizienten der in Echtzeit mit einem Mikrocontroller (11) durch ein Polynom approximierten Äste der Hysteresekurve erfolgt.

7. Drehmomentsensor zur Durchführung des Verfahrens nach einem der Ansprüche 1 bis 6 mit einer drehbaren Welle (2) zugeordneten zumindest einem Magnetisierungsmittel (3) und zumindest einer Detektorwicklung (4a, 4b), **dadurch gekennzeichnet, dass** das Magnetisierungsmittel (3) unter +/- 45 ° zur Wellenachse (A) elektromagnetisch ausgerichtet ist.

8. Drehmomentsensor nach Anspruch 7, **dadurch gekennzeichnet, dass** zwei Detektorwicklungen (4a, 4b) vorhanden und in einer magnetischen Brückenschaltung (13) rechtwinklig zueinander angeordnet sind.

9. Drehmomentsensor nach Anspruch 7 oder 8, **dadurch gekennzeichnet, dass** die Welle (2) als Hohlwelle ausgebildet ist, welche am Innenmantel mindestens die Hälfte der Spannungsbeanspruchung wie am Aussenmantel ausbildet.

10. Drehmomentsensor nach einem der Ansprüche 7 bis 9, **dadurch gekennzeichnet, dass** das Magnetisierungsmittel (3) konstruktiv derart ausgebildet ist, um in Teilen an die Welle (2) im eingebauten Zustand anfügbar zu sein.

11. Drehmomentsensor nach einem der Ansprüche 7 bis 10, **dadurch gekennzeichnet, dass** das Magnetisierungsmittel (3) ein Elektromagnet ist.

12. Drehmomentsensor nach einem der Ansprüche 7 bis 10, **dadurch gekennzeichnet, dass** das Magnetisierungsmittel (3) ein Permanentmagnet (12a, 12b) ist, welcher von der Detektorwicklung (4a, 4b) umfänglich beabstandet angeordnet ist.
